(19) Europäisches Patentamt
European Patent Office
Office européen des brevets

(11) **EP 3 484 043 A1**

(12) **EUROPEAN PATENT APPLICATION**

(43) Date of publication:
**15.05.2019 Bulletin 2019/20**

(51) Int Cl.:
**H02P 6/08** *(2016.01)* **H02M 5/458** *(2006.01)*
**H02K 7/02** *(2006.01)*

(21) Application number: **18165416.1**

(22) Date of filing: **03.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.11.2017 JP 2017217303**

(71) Applicant: **Kabushiki Kaisha Yaskawa Denki Kitakyushu-shi, Fukuoka 806-0004 (JP)**

(72) Inventors:
• SAWAMURA, Mitsujiro
  Kitakyushu-shi, Fukuoka 806-0004 (JP)
• KAWAHARA, Shouta
  Kitakyushu-shi, Fukuoka 806-0004 (JP)
• WADA, Tatsuaki
  Kitakyushu-shi, Fukuoka 806-0004 (JP)

(74) Representative: **Viering, Jentschura & Partner mbB**
**Patent- und Rechtsanwälte**
**Am Brauhaus 8**
**01099 Dresden (DE)**

(54) **MOTOR CONTROLLER, POWER CONVERTER, AUXILIARY POWER SOURCE, AND METHOD FOR CONTROLLING AUXILIARY POWER SOURCE**

(57) A motor controller includes an AC-to-DC converter configured to convert AC power from an AC power source into DC power and supply the DC power to a DC bus line. An auxiliary power source charges the DC bus line with the DC power and discharges the DC power from the DC bus line. A first inverter controls power supply to a motor using the DC power from the DC bus line. The auxiliary power source includes a rotating electrical machine. A flywheel is connected to the machine. A second inverter supplies power to the machine using the DC power on the DC bus line and regenerates the power from the machine into the DC power on the DC bus line. A controller controls the second inverter to cause a rotational angle velocity of the flywheel to keep a positive correlation with a bus-to-bus voltage of the DC bus line.

**FIG. 1**

**Description**

BACKGROUND

FIELD OF THE INVENTION

The present invention relates to a motor controller, a power converter, an auxiliary power source, and a method for controlling an auxiliary power source.

DISCUSSION OF THE BACKGROUND

JP 5291763B discloses a motor driver that uses both a capacitor accumulator and a flywheel accumulator. In controlling charging and discharging of the flywheel accumulator, the motor driver controls the angular velocity of a flywheel of the flywheel accumulator.

The contents of JP 5291763B are incorporated herein by reference in their entirety.

With the technique disclosed in JP 5291763B, it is difficult to adjust a step of varying the amounts of charging and discharging in and from a flywheel. This necessitates a complicated sequence, resulting in complicated control operations.

The present disclosure has been made in view of the above circumstances, and it is an object of the present disclosure to provide a motor controller, a power converter, an auxiliary power source, and a method for controlling an auxiliary power source in order to provide an improved auxiliary supply function of DC power using a simplified control configuration.

SUMMARY

According to one aspect of the present disclosure, a motor controller includes an AC-to-DC converter, an auxiliary power source, and a first inverter. The AC-to-DC converter is configured to convert AC power from an AC power source into DC power and configured to supply the DC power to a DC bus line. The auxiliary power source is configured to charge the DC bus line with the DC power and discharge the DC power from the DC bus line. The first inverter is configured to control power supply to a motor using the DC power from the DC bus line. The auxiliary power source includes a rotating electrical machine, a flywheel, a second inverter, and a controller. The flywheel is connected to the rotating electrical machine. The second inverter is configured to supply power to the rotating electrical machine using the DC power on the DC bus line and configured to regenerate the power from the rotating electrical machine into the DC power on the DC bus line. The controller is configured to control the second inverter to cause a rotational angle velocity of the flywheel to keep a positive correlation with a bus-to-bus voltage of the DC bus line.

According to another aspect of the present disclosure, a power converter includes an AC-to-DC converter and an auxiliary power source. The AC-to-DC converter is configured to convert AC power from an AC power source into DC power and configured to supply the DC power to a DC bus line. The auxiliary power source is configured to charge the DC bus line with the DC power and discharge the DC power from the DC bus line. The auxiliary power source includes a rotating electrical machine, a flywheel, a second inverter, and a controller. The flywheel is connected to the rotating electrical machine. The second inverter is configured to supply power to the rotating electrical machine using the DC power on the DC bus line and configured to regenerate the power from the rotating electrical machine into the DC power on the DC bus line. The controller is configured to control the second inverter to cause a rotational angle velocity of the flywheel to keep a positive correlation with a bus-to-bus voltage of the DC bus line.

According to another aspect of the present disclosure, an auxiliary power source is configured to charge a DC bus line with DC power and discharge the DC power from the DC bus line. The auxiliary power source includes a rotating electrical machine, a flywheel, a second inverter, and a controller. The flywheel is connected to the rotating electrical machine. The second inverter is configured to supply power to the rotating electrical machine using the DC power on the DC bus line and configured to regenerate the power from the rotating electrical machine into the DC power on the DC bus line. The controller is configured to control the second inverter to cause a rotational angle velocity of the flywheel to keep a positive correlation with a bus-to-bus voltage of the DC bus line.

According to the other aspect of the present disclosure, a method is for controlling an auxiliary power source. The auxiliary power source includes a rotating electrical machine, a flywheel, and a second inverter. The flywheel is connected to the rotating electrical machine. The second inverter is configured to supply power to the rotating electrical machine using DC power on a DC bus line and configured to regenerate the power from the rotating electrical machine into the DC power on the DC bus line. The method includes controlling the second inverter to cause a rotational angle velocity of the flywheel to keep a positive correlation with a bus-to-bus voltage of the DC bus line.

The embodiments of the present invention provide an improved auxiliary supply function of DC power using a simplified control configuration.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

     FIG. 1 is a schematic illustrating a circuit configuration of a motor controller according to an embodiment;

FIG. 2 is a diagram illustrating a specific configuration of a power source inverter;

FIG. 3 is a diagram illustrating a comparative configuration in which a charging-discharging capacitor is directly connected to a DC bus line and disposed between the DC bus line;

FIG. 4 illustrates exemplary control blocks for velocity control performed by a controller;

FIG. 5 shows results of simulations of a charging-discharging test where no auxiliary power source is provided;

FIG. 6 shows results of simulations of a charging-discharging test where a charging-discharging capacitor is provided as an auxiliary power source;

FIG. 7 shows results of simulations of a charging-discharging test where an auxiliary power source according to the embodiment is provided as an auxiliary power source; and

FIG. 8 illustrates exemplary control blocks for velocity control performed by the controller where the velocity control is velocity sensor-less control.

DESCRIPTION OF THE EMBODIMENTS

The embodiments will now be described with reference to the accompanying drawings, wherein like reference numerals designate corresponding or identical elements throughout the various drawings.

Schematic Configuration of Motor Controller

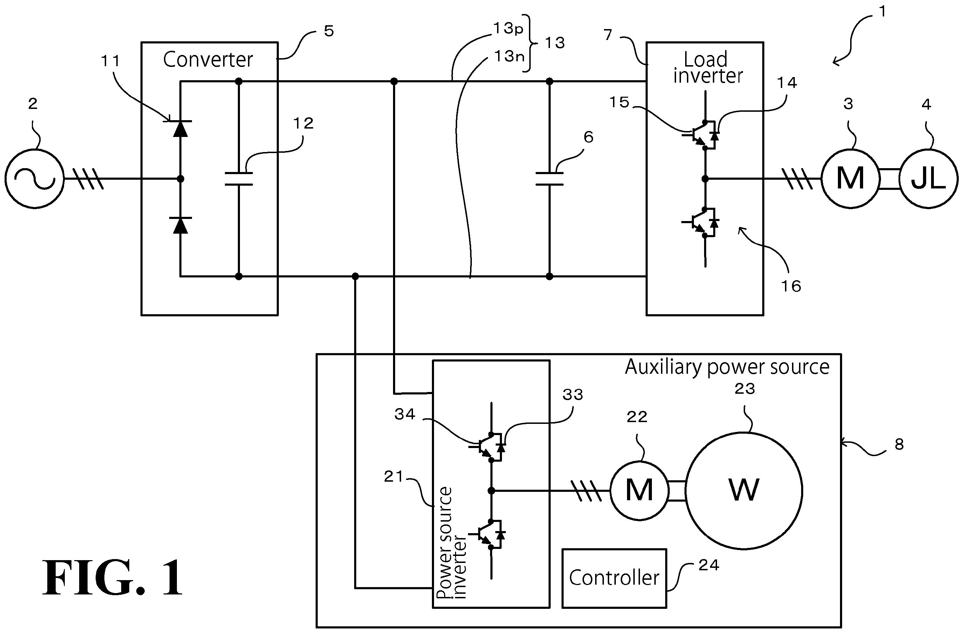

FIG. 1 is a schematic illustrating a circuit configuration of a motor controller 1 according to this embodiment. The motor controller 1 converts alternating-current (AC) power supplied from an external AC power source 2 into direct-current (DC) power, and converts the DC power into predetermined AC power. Then, the motor controller 1 supplies the predetermined AC power to a load motor 3. In this manner, the motor controller 1 controls driving of the load motor 3 and a load machine 4, which is connected to the load motor 3. Referring to FIG. 1, the motor controller 1 includes a converter 5, a surge-dedicated smoothing capacitor 6, a load inverter 7, and an auxiliary power source 8.

The converter 5 (AC-to-DC converter) includes rectifiers 11 and a power source-dedicated smoothing capacitor 12. The rectifiers 11 are diode bridges, for example, that rectify AC power from the external AC power source into DC power. The power source-dedicated smoothing capacitor 12 smoothens the DC power and supplies the smoothened DC power to a DC bus line 13.

The surge-dedicated smoothing capacitor 6 extends between and is connected to wirings of the DC bus lines, and has a comparatively small capacity for surge protection purposes.

The load inverter 7 (first inverter) includes a switching circuit 16. The switching circuit 16 includes bridge-connected semiconductor switching elements 15, each of which is connected in parallel to a flywheel diode 14. The load inverter 7 causes a drive controller, not illustrated, to perform pulse width modulation (PWM) control to switch each of the semiconductor switching elements 15 in a desired manner. In this manner, the load inverter 7 converts the DC power on the DC bus line 13 into an AC voltage having a desired frequency and a desired waveform, and supplies the AC voltage to the load motor 3 so as to control driving of the load motor 3. The load inverter 7 also has a function of regenerating regeneration power from the load motor 3 to the DC bus line 13. In the following description, the circuit made up of the converter 5, the surge-dedicated smoothing capacitor 6, and the load inverter 7 will be referred to as main circuit. The load motor 3 is a non-limiting example of the motor recited in the appended claims.

The auxiliary power source 8 includes a power source inverter 21, a power source motor 22, and a flywheel 23 (these elements will be detailed later). The auxiliary power source 8 is connected to and disposed between the wirings of the DC bus line 13 of the main circuit. With this configuration, the auxiliary power source 8 performs interchange of energy between the electric energy on the DC bus line 13 and the rotational motion energy on the flywheel 23. That is, by actively controlling rotational motion of the flywheel 23, the auxiliary power source 8 selectively performs a charging operation and a discharging operation with respect to the DC bus line 13.

In the motor controller 1 with the configuration described hereinbefore, the control-target load motor 3 may occasionally have a high throughput. In this case, if the driving of the load motor 3 is controlled to make sharp acceleration and/or sharp deceleration, the DC voltage across the DC bus line 13 (bus-to-bus voltage) may vary greatly, resulting in a great excess or a great shortage of the DC power. This may make the motor controller instable. In light of the circumstances, the auxiliary power source 8 selectively performs power peak shaving or power assistance, depending on how the DC voltage in the main circuit is changing. Specifically, when the bus-to-bus voltage has increased, the auxiliary power source 8 converts the DC power corresponding to the increased portion of the bus-to-bus voltage into rotational motion energy for the flywheel 23, and causes the rotational motion energy to accumulate in the flywheel 23. In this manner, the auxiliary power source 8 performs power peak shaving of charging the auxiliary power source 8 with the DC power on the DC bus line 13. When the bus-to-bus voltage has decreased, the auxiliary power source 8 compensates for the decreased portion of the bus-to-bus voltage by converting the rotational motion energy on the flywheel 23 into DC power. In this manner, the auxiliary power source 8 performs power assistance of discharging (regenerating) DC power. That is, the auxiliary power source 8 serves as a "flywheel battery" in that the auxiliary power source 8 performs a charging operation or a discharging operation, depending on an excess or shortage of the DC power on the DC bus line 13 of the main circuit, by performing interchange of energy between the electric energy on the DC bus line 13 and the rotational motion energy on the flywheel 23.

Detailed Configuration and Functions of Auxiliary Power Source

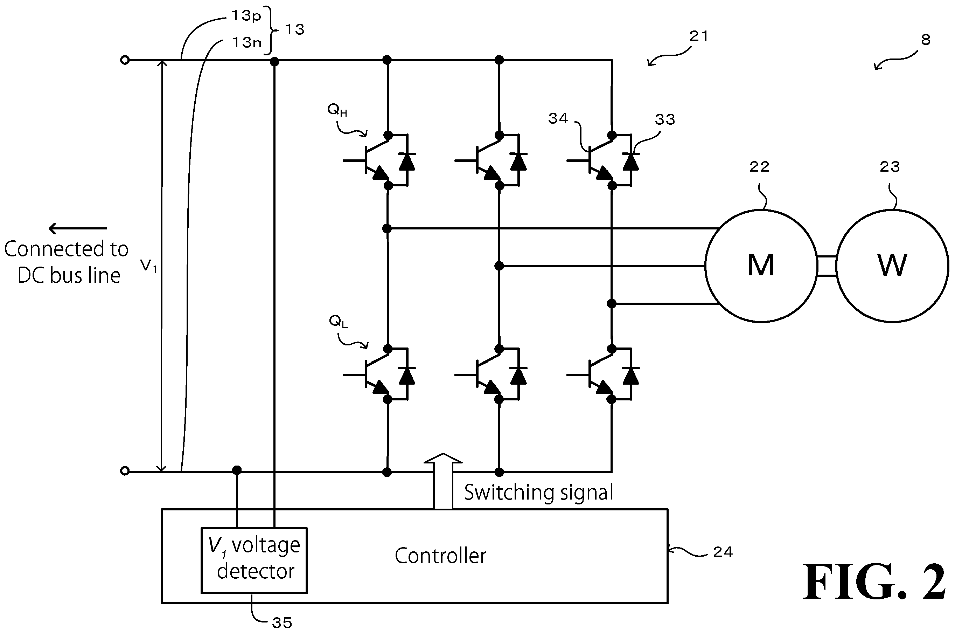

FIG. 2 is a diagram illustrating a specific configuration of the auxiliary power source 8. The auxiliary power source 8 includes a controller 24, in addition to the power source inverter 21, the power source motor 22, and the flywheel 23, described above.

The power source inverter 21 (second inverter) is a circuit made up of three parallel bridge-connected series circuits each made up of two arm-switching elements $Q_H$ and $Q_L$ connected in series to each other. Each of the arm-switching elements $Q_H$ and $Q_L$ is made up of a flywheel diode 33 and a semiconductor switching element 34 connected in parallel to each other. At both ends of the three parallel connections, the power source inverter 21 is connected to the wirings of the DC bus line 13, with an intermediate point between the two arm-switching elements $Q_H$ and $Q_L$ of each of the three parallel connections being connected to a different one of the three phase terminals of the power source motor 22, which is a three-phase AC motor. With this configuration, the power source inverter 21 has its semiconductor switching elements 34 switched in a desired manner by switching signals output from the controller 24, described later. In this manner, the power source inverter 21 serves a function of converting the DC power on the DC bus line 13 into three-phase AC power and supplying the three-phase AC power to the power source motor 22. The power source inverter 21 also has a function of converting (regenerating) three-phase AC power regenerated from the power source motor 22 into DC power on the DC bus line 13.

The power source motor 22 (rotating electrical machine) is a rotatable three-phase AC motor having an output shaft mechanically connected to the flywheel 23, which has a high fixed inertia (inertia moment).

The controller 24 includes a bus-to-bus voltage detector 35 (which is simply termed "$V_1$ voltage detector" in FIG. 2). The bus-to-bus voltage detector 35 detects bus-to-bus voltage $V_1$ between a positive wiring 13p and a negative wiring 13n of the DC bus line 13. Then, the controller 24 performs PWM control based on a detection value obtained by the bus-to-bus voltage detector 35 so as to output a switching signal that controls switching of the arm-switching elements $Q_H$ and $Q_L$.

In the auxiliary power source 8 with the configuration described hereinbefore, the power source inverter 21 supplies driving power to the power source motor 22. This causes the power source motor 22 to function as an electrical machine to drive the flywheel 23 into rotation. That is, electric energy is converted into rotational motion energy, which accumulates in the flywheel 23. When the electric energy supplied to the power source motor 22 is lower than the rotational motion energy on the flywheel 23, slowing-down rotation of the flywheel 23 causes the power source motor 22 to function as an electric generator to output regeneration power to the power source inverter 21. That is, rotational motion energy is converted into electric energy, which is discharged to the power source inverter 21.

The above charging operation and discharging operation are switched based on the balance between: the duty ratio of the PWM control that the controller 24 performs to switch the arm-switching elements $Q_H$ and $Q_L$; and the bus-to-bus voltage $V_1$ of the DC bus line 13. That is, in order to intentionally switch between the charging operation and the discharging operation in the auxiliary power source 8, it is necessary to monitor both the rotational angle velocity of the flywheel 23 and the bus-to-bus voltage $V_1$ and to perform power supply control with respect to the power source motor 22 appropriately, that is, with the rotational angle velocity and the bus-to-bus voltage $V_1$ taken into consideration in the power supply control.

Method of Power Supply Control of Power Source Motor

In this embodiment, the auxiliary power source 8 is originally intended, as described above, to perform peak shaving control of charging the auxiliary power source 8 (thereby accelerating the flywheel 23) when the bus-to-bus voltage $V_1$ increases, and to perform peak assistance control of discharging from the auxiliary power source 8 (thereby decelerating the flywheel 23) when the bus-to-bus voltage $V_1$ decreases. It is difficult, however, to adjust the timing at which to switch between the peak shaving control and the peak assistance control and difficult to adjust the step of varying the amount of charging in the peak shaving control and the amount of discharging in the peak assistance control. This necessitates a complicated sequence, often resulting in complicated power supply control with respect to the power source motor 22.

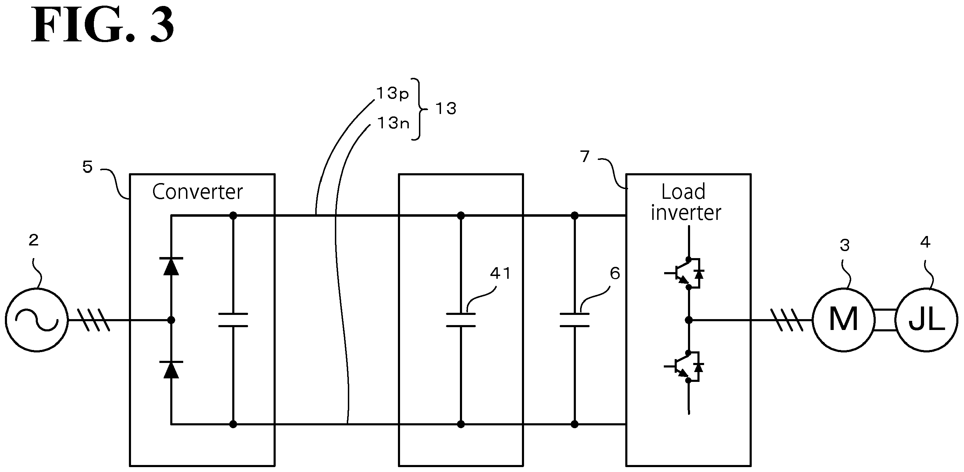

In this respect, in the comparative example illustrated in FIG. 3, a charging-discharging capacitor 41 is directly connected to and disposed between the wirings of the DC bus line 13. This configuration eliminates the need for the above-described control of switching between a charging operation and a discharging operation. Thus, this configuration is most preferable from a control easiness standpoint. In view of the circumstances, in the power supply control with respect to the power source motor 22, this embodiment performs software-implemented control with respect to the rotational angle velocity of the flywheel 23 using the controller 24. This software-implemented control enables the auxiliary power source 8 as a whole to perform charging and discharging operations through behaviors equivalent to behaviors of a single charging-discharging capacitor 41 of the comparative example illustrated in FIG. 3.

Specifically, when the auxiliary power source 8 as a whole according to this embodiment is assumed to be equivalent to the single charging-discharging capacitor 41, it can also be assumed that approximately equal energy is accumulable in the auxiliary power source 8 and the single charging-discharging capacitor 41, which can be represented by the following Formula (1):

$$\frac{1}{2}CV^2 = \frac{1}{2}J\omega^2 \quad \cdots \quad (1)$$

In Formula (1), C is capacitance of the charging-discharging capacitor 41 (capacitor); V is interterminal voltage of the charging-discharging capacitor 41; J is inertia of a rotatable portion as a whole, the rotatable portion of the auxiliary power source 8 including the rotor of the power source motor 22 and the flywheel 23 (the rotatable portion also includes couplings and similar devices); and $\omega$ is rotational angle velocity of the rotatable portion.

From Formula (1), the rotational angle velocity $\omega$ and the capacitance C can be isolated as in the following Formulae (2) and (3), respectively:

$$\omega = \sqrt{\frac{C}{J}}V \quad \cdots \quad (2)$$

$$C = J\left(\frac{\omega}{V}\right)^2 \quad \cdots \quad (3)$$

Formula (2) shows that the above-described equivalency can be maintained as long as the rotational angle velocity $\omega$ of the flywheel 23 has a positive correlation with the bus-to-bus voltage $V_1$; more specifically, as long as the rotational angle velocity $\omega$ is proportionally related to the bus-to-bus voltage $V_1$ ($\omega = (C/J)^{1/2} \cdot V_1$). With the equivalency maintained, Formula (3) shows that the charging capacity of the auxiliary power source 8 can be assumed to be equivalent to the capacitance C (= $J \cdot (\omega/V_1)^2$).

Thus, in this embodiment, the power source inverter 21 of the auxiliary power source 8 performs power supply control with respect to the power source motor 22 in such a manner that the rotational angle velocity $\omega$ of the flywheel 23 is, at any time, in a direct-proportional correlation with the bus-to-bus voltage $V_1$ with a proportional coefficient of $(C/J)^{1/2}$. With the simple control of keeping a direct-proportional correlation between the rotational angle velocity $\omega$ of the flywheel 23 and the bus-to-bus voltage $V_1$, the charging-discharging control of the auxiliary power source 8 is implemented without the necessity to focus on the switching between charging control (peak shaving control) and discharging control (peak assistance control) and with responsivity high enough to automatically accommodate to an increase or decrease in the bus-to-bus voltage $V_1$. Also, adjusting the inertia J in a desired manner facilitates the setting of the charging capacity C of the auxiliary power source 8 according to an expected range of variation of the bus-to-bus voltage $V_1$ of the DC bus line 13 of the main circuit.

Exemplary Feedback Control Block

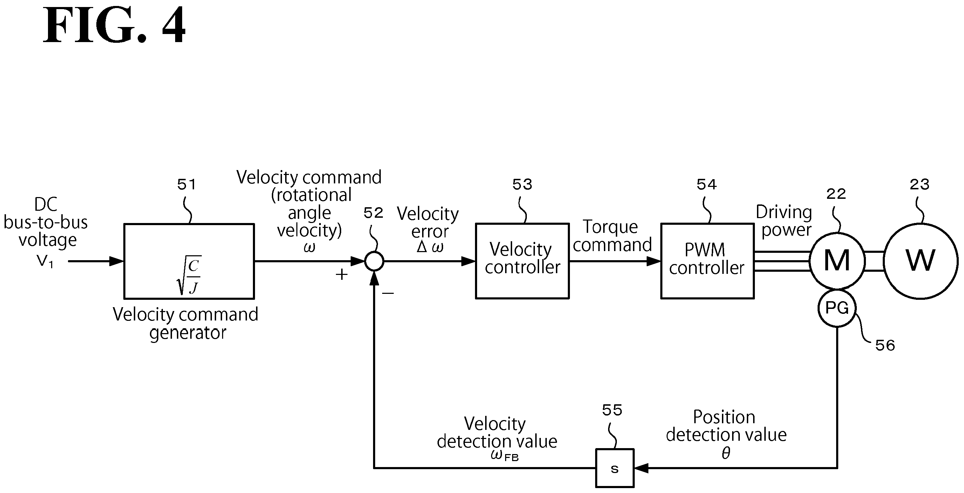

FIG. 4 illustrates exemplary feedback control blocks for implementing power supply control with respect to the power source motor 22 according to this embodiment. The control blocks are illustrated in transfer function form and included in the controller 24 of the auxiliary power source 8 in a software-implemented manner. Referring to FIG. 4, the controller 24 includes a velocity command generator 51, a subtractor 52, a velocity controller 53, a PWM controller 54, and a velocity converter 55.

The velocity command generator 51 multiplies the bus-to-bus voltage $V_1$ detected by the bus-to-bus voltage detector 35 by a predetermined proportional coefficient ($(C/J)^{1/2}$), and regards the obtained product as velocity command $\omega$.

The subtractor 52 subtracts velocity detection value $\omega_{FB}$, described later, from the velocity command $\omega$, and outputs the obtained difference as velocity error $\Delta\omega$.

The velocity controller 53 generates a torque command by performing, for example, proportional-integral (PI) control with respect to the input velocity error $\Delta\omega$.

The PWM controller 54 performs switching of the power source inverter 21 (not illustrated in FIG. 4) by PWM control with a duty ratio based on the above-described torque command. In this manner, the PWM controller 54 converts the DC power on the DC bus line 13 into AC power and supplies the AC power to the power source motor 22.

The power source motor 22 includes a position detector 56, such as an encoder (not illustrated in FIGs. 1 and 2). The position detector 56 detects the rotation angle of the power source motor 22 (the flywheel 23) as position detection value $\theta$. The velocity converter 55 converts the position detection value $\theta$ into velocity detection value $\omega_{FB}$ of the power source motor 22, and outputs the velocity detection value $\omega_{FB}$ to the subtractor 52. The velocity converter 55 may be implemented by a "differentiator (s)".

With these feedback control blocks, the controller 24 generates a velocity command $\omega$ that is in a direct-proportional correlation with the bus-to-bus voltage $V_1$ detected at the present point of time with the proportional coefficient being $(C/J)^{1/2}$. Then, the controller 24 controls driving of the flywheel 23 to cause the rotational angle velocity of the flywheel 23 to follow the velocity command $\omega$. That is, the controller 24 performs power supply control with respect to the power source motor 22 in such a manner that the rotational angle velocity $\omega$ of the flywheel 23 is at any time in a direct-proportional correlation with the bus-to-bus voltage $V_1$ with the proportional coefficient being $(C/J)^{1/2}$.

Results of Simulations

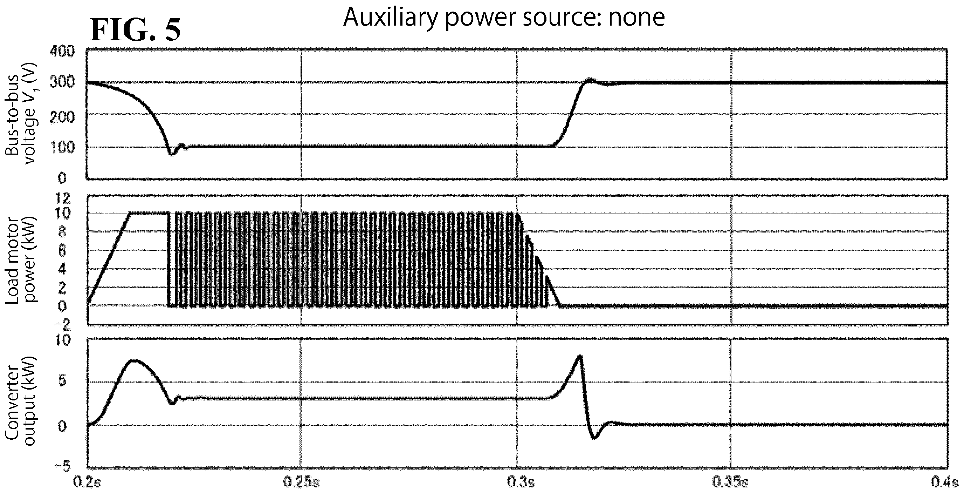

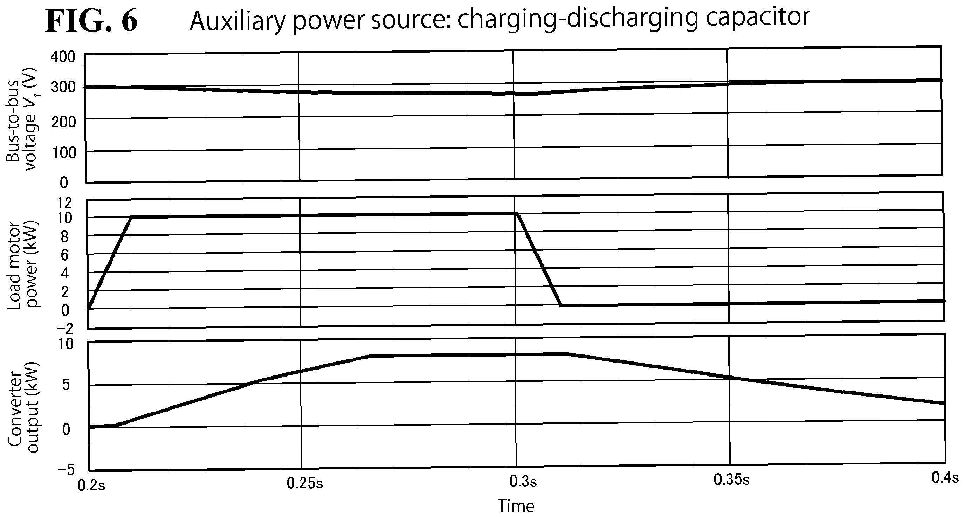

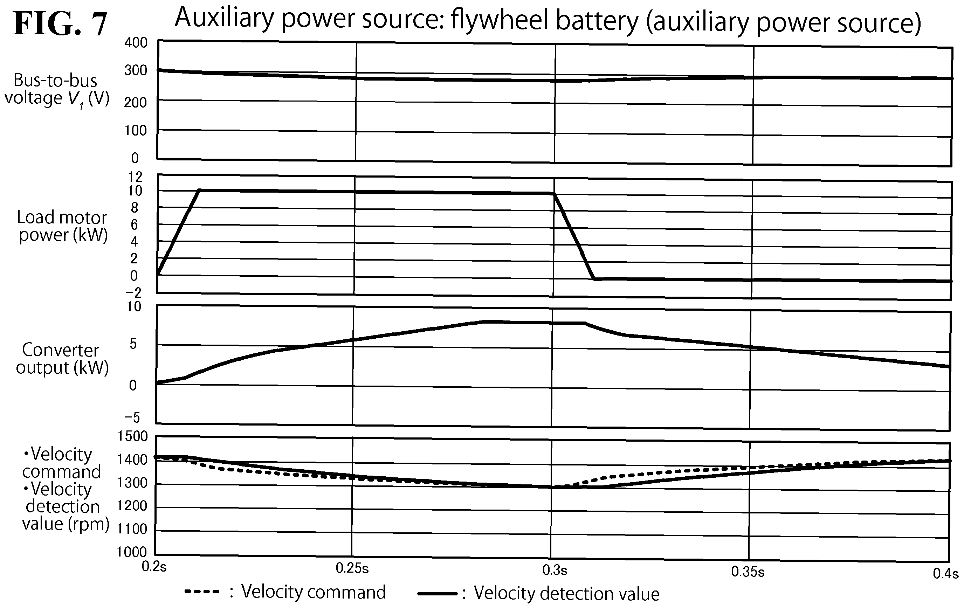

FIG. 5 shows time charts showing results of simulations performed in a comparative example (not illustrated) in which the main circuit includes no auxiliary power source. In the simulations, the load motor 3 was driven in a predetermined load pattern, and how the bus-to-bus voltage $V_1$, the load motor power, and the converter output changed over time was simulated. FIG. 6 shows time charts showing results of simulations performed in the comparative example illustrated in FIG. 3, in which the main circuit includes, as an auxiliary power source, the charging-discharging capacitor 41, which has a predetermined capacitance $C$. The simulations used the parameters used in FIG. 5. FIG. 7 shows time charts showing results of simulations performed in a configuration in which the main circuit includes, as an auxiliary power source, the auxiliary power source 8 according to this embodiment with a charging capacity identical to the capacitance C of the charging-discharging capacitor 41 illustrated in FIG. 6. In the simulations, how the velocity command $\omega$ (see the dotted line in the lowest chart of FIG. 7) and the velocity detection value $\omega_{FB}$ (see the solid line in the lowest chart of FIG. 7), in addition to the parameters illustrated in FIGs. 5 and 6, changed over time was simulated. For ease of illustration of the time charts, in the simulations, the load motor power is dropped to zero when the bus-to-bus voltage $V_1$ becomes 100 V or less (that is, no matter how high the load motor power becomes, the bus-to-bus voltage $V_1$ is kept around 100 V at the minimum).

In FIG. 5, where no auxiliary power source is provided, as the load motor power increases, the DC power on the DC bus line 13 falls short, resulting in a sharp decrease in the bus-to-bus voltage $V_1$. The sharp decrease in the bus-to-bus voltage $V_1$ causes a sharp increase in the converter output, adding more DC power. The additional DC power, however, is not enough to cover the deficiency in DC power on the bus-to-bus voltage $V_1$. The bus-to-bus voltage $V_1$, therefore, remains short, resulting in an abnormal operation state.

In FIG. 6, where the charging-discharging capacitor 41 is provided as an auxiliary power source, the bus-to-bus voltage $V_1$ decreases only gently when the load motor power increases, causing a large amount of the DC power on the DC bus line 13 to be consumed. Additionally, the range of variation of the bus-to-bus voltage $V_1$ is narrower. This is because even though the increase in the converter output is not enough to cover the deficiency in DC power, the deficiency is covered by DC power discharged from the charging-discharging capacitor 41 (this corresponds to power assistance). FIG. 6 also shows that after the load motor power has decreased, the bus-to-bus voltage $V_1$ gradually increases to its initial voltage. This is because the converter output decreases after the load motor power has decreased, and the amount of decrease in DC power caused by the load motor 3 accumulates in the charging-discharging capacitor 41 (this is equivalent to power peak shaving after power assistance).

In FIG. 7, where the auxiliary power source 8 according to this embodiment is provided, the range of variation over time of the bus-to-bus voltage $V_1$ is approximately as narrow as the case of the charging-discharging capacitor 41 illustrated in FIG. 6. This applies both in the case where the load motor power increases, causing a large amount of the DC power on the DC bus line 13 to be consumed and in the case where the load motor power decreases, stopping consumption of DC power. These findings lead to the assumption that the auxiliary power source 8 according to this embodiment is capable of performing charging and discharging operations through behaviors equivalent to behaviors of the charging-discharging capacitor 41 illustrated in FIG. 6.

It is noted that while there is a deficiency in the DC power on the DC bus line 13 due to an increase in the load motor power, the velocity detection value $\omega_{FB}$ of the power source motor 22 (see the solid line in the lowest chart of FIG. 7) shows a deceleration following the velocity command $\omega$ (see the dotted line in the lowest chart of FIG. 7) that is slightly lower than the velocity detection value $\omega_{FB}$. This causes regeneration power to occur in the power source motor 22 due to slowing-down rotation of the flywheel 23 (rotational motion energy on the flywheel 23 is converted into electric energy), causing the auxiliary power source 8 to discharge DC power to the DC bus line 13. Thus, it can be seen that "power assistance control" is performed.

While there is an excessive amount of DC power on the DC bus line 13 due to a decrease in the load motor power, the velocity detection value $\omega_{FB}$ of the power source motor 22 (see the solid line in the drawing) shows an acceleration following the velocity command $\omega$ (see the dotted line in the lowest chart of FIG. 7) that is slightly higher than the velocity detection value $\omega_{FB}$. This causes the power source motor 22 to consume DC power, accelerating the flywheel 23 (electric energy is converted into rotational motion energy on the flywheel 23) and causing the auxiliary power source 8 to be charged from the DC bus line 13. Thus, it can be seen that control equivalent to "power peak shaving control" is performed.

In the simulations, rotation velocity $N_0$ of the power source motor 22 is regarded as initial operation velocity of the power source motor 22. At the rotation velocity $N_0$, the power source motor 22 accumulates therein approximately half ($Emax/2$) the maximum amount of rotational motion energy, $Emax$, that the flywheel 23 is able to accommodate while the power source motor 22 is rotating at its maximum velocity, $Nmax$. In this case, the following balance equation of energy can be established:

$$\frac{1}{2} \times \frac{1}{2} J N_{max}{}^2 = \frac{1}{2} J N_0{}^2 \quad \cdots (4)$$

From this balance equation of energy, the initial operation velocity $N_0$ can be represented as follows:

$$N_0 = \frac{N_{max}}{\sqrt{2}} \quad \cdots (5)$$

Setting the initial operation velocity $N_0$ in this manner ensures that approximately equal allowance margins are provided in the charging capacity and the discharging capacity. This allows for a charging-discharging process performed in the order: power assistance → power peak shaving, as in the above simulations, and a charging-discharging process performed in the opposite order: power peak shaving → power assistance (not illustrated). Advantageous Effects of This Embodiment

As has been described hereinbefore, the motor controller 1 according to this embodiment includes the controller 24. The controller 24 controls the power source inverter 21, which performs supply and regeneration of power to and from the power source motor 22 relative to the DC power on the DC bus line 13, to cause the rotational angle velocity $\omega$ of the flywheel 23 to keep a positive correlation with the bus-to-bus voltage $V_1$ of the DC bus line 13. Performing this control of keeping a positive correlation eliminates the need for a complicated sequence of intentionally switching between the peak shaving control and the peak assistance control, enabling charging-discharging control of the auxiliary power source 8 to be performed with responsivity high enough to automatically accommodate to an increase or decrease in the bus-to-bus voltage $V_1$. This results in an improved auxiliary supply function of DC power implemented using a simplified control configuration.

Also in this embodiment, the controller 24 controls the power source inverter 21 to cause the rotational angle velocity $\omega$ of the flywheel 23 to keep a direct-proportional correlation with the bus-to-bus voltage $V_1$ ($\omega = (C/J)^{1/2} \cdot V_1$) using the proportional coefficient ($(C/J)^{1/2}$). The proportional coefficient is represented by a square root of a ratio between a denominator represented by the inertia J (inertia moment) of the rotatable portion of the auxiliary power source 8 including the rotor of the power source motor 22 and the flywheel 23 (the rotatable portion also includes couplings and similar devices) and a numerator represented by the capacitance C of the charging-discharging capacitor 41 having accumulable energy equivalent to the inertia $J$. Although this control is simple, it ensures charging-discharging control as functional as when the single charging-discharging capacitor 41 (capacitor), which has approximately the same capacity as the auxiliary power source 8, is directly connected to the wirings of the DC bus line 13.

Also in this embodiment, the controller 24 calculates rotational angle velocity based on the bus-to-bus voltage $V_1$ detected from the DC bus line 13 and based on the proportional coefficient ($(C/J)^{1/2}$), and then inputs the rotational angle velocity into the power source inverter 21 as the velocity command $\omega$. Then, the power source inverter 21 supplies power to the power source motor 22 to keep the velocity indicated by the input velocity command $\omega$. This configuration ensures that the auxiliary power source 8 can be implemented as a flywheel battery with attention to details using a commonly available inverter (servo amplifier) for velocity control.

Also in this embodiment, the power source inverter 21 supplies power to the power source motor 22 to keep the rotational angle velocity indicated by the velocity command $\omega$ by feedback control using, as a feedback value, the rotational angle velocity (velocity detection value $\omega_{FB}$) detected from at least one of the power source motor 22 and the flywheel 23. This configuration ensures charging-discharging control that is high in accuracy enough to deal with variations in the rotational angle velocity of the flywheel 23 in actual situations. It will be understood by those skilled in the art that when such high accuracy is not required of charging-discharging control with respect to the main circuit, feedforward control or other control (not illustrated) than feedback control may be employed. Modifications

Modifications of the above-described embodiment will be described below. Modification 1: Controller of Auxiliary Power Source Performs Velocity Sensor-less Control

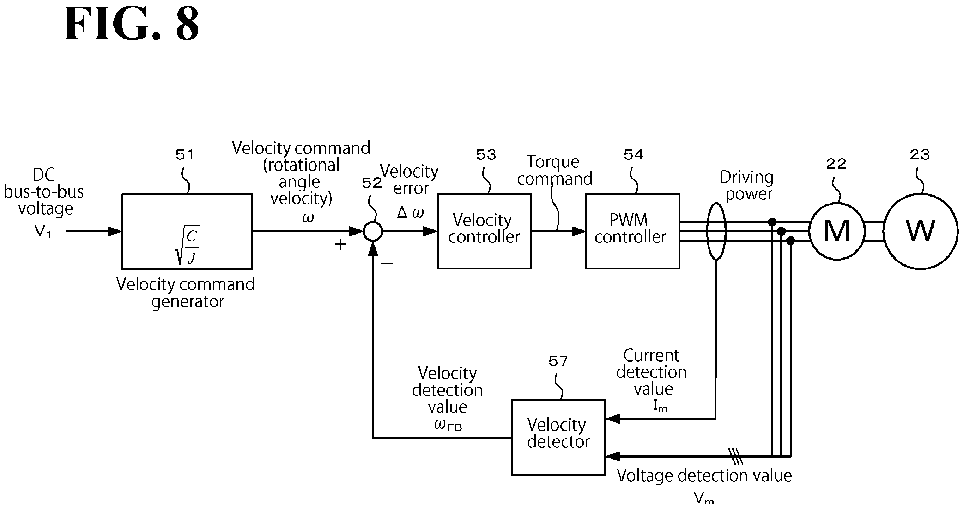

In the above-described embodiment, the power source motor 22 of the auxiliary power source 8 includes the position detector 56, such as an encoder. The position detector 56 detects the position detection value $\theta$, and the velocity converter 55 of the controller 24 converts the detected position detection value $\theta$ into the velocity detection value $\omega_{FB}$ for use in speed feedback control. This configuration, however, is not intended in a limiting sense. A possible modification is illustrated in FIG. 8, which corresponds to FIG. 4. Referring to the feedback control blocks illustrated in FIG. 8, the current and voltage of the driving power supplied to the power source motor 22 are detected as current detection value $I_m$ and voltage detection value $V_m$, respectively. Based on these detection values $I_m$ and $V_m$, a velocity detector 57 calculates velocity detection value $\omega_{FB}$, and this velocity detection value $\omega_{FB}$ is used for speed feedback control. This method of calculation performed by the velocity detector 57 may be a method used in known velocity sensor-less control, and will not be elaborated upon here. This configuration eliminates the need for the position detector 56, which can be expensive, resulting in a reduction in production cost of the system as a whole. Modification

## 2: Additional Notes

Another possible modification is that the power converter is implemented only by the converter 5 and the auxiliary power source 8 illustrated in FIG. 1. This configuration is suitable for, in particular, a power source used for stability purposes for electrical machines (such as a personal computer), other than the motor controller 1. Still another possible modification is that the auxiliary power source 8 alone constitutes an independent auxiliary power source. This configuration is suitable for, in particular, an application in which a typical DC power source connectable to a large number of electrical machines is connected to or disconnected from the DC bus line 13 as desired depending on the number of electrical machines connected.

As used herein, the terms "perpendicular", "parallel", and "plane" may not necessarily mean "perpendicular", "parallel", and "plane", respectively, in a strict sense. Specifically, the terms "perpendicular", "parallel", and "plane" mean "approximately perpendicular", "approximately parallel", and "approximately plane", respectively, with design-related and production-related tolerance and error taken into consideration.

Also, when the terms "identical", "same", "equivalent", and "different" are used in the context of dimensions, magnitudes, sizes, or positions, these terms may not necessarily mean "identical", "same", "equivalent", and "different", respectively, in a strict sense. Specifically, the terms "identical", "same", "equivalent", and "different" mean "approximately identical", "approximately same", "approximately equivalent", and "approximately different", respectively, with design-related and production-related tolerance and error taken into consideration.

Otherwise, the embodiments and modifications may be combined in any manner deemed suitable. Obviously, numerous modifications and variations of the present disclosure are possible in light of the above teachings. It is therefore to be understood that within the scope of the appended claims, the present disclosure may be practiced otherwise than as specifically described herein.

1    Motor controller
2    AC power source
3    Load motor (motor)
4    Load machine
5    Converter (AC-to-DC converter)
6    Surge-dedicated smoothing capacitor
7    Load inverter (first inverter)
8    Auxiliary power source (auxiliary power source)
11   Rectifier
12   Power source-dedicated smoothing capacitor
13   DC bus line
21   Power source inverter (second inverter)
22   Power source motor (rotating electrical machine)
23   Flywheel
24   Controller

33   Flywheel diode
34   Semiconductor switching element
35   Bus-to-bus voltage detector
41   Charging-discharging capacitor
51   Velocity command generator
52   Subtractor
53   Velocity controller
54   PWM controller
55   Velocity converter
56   Position detector
57   Velocity detector

## Claims

1.  A motor controller (1), **characterized by**:

    an AC-to-DC converter (5) configured to convert AC power from an AC power source into DC power and configured to supply the DC power to a DC bus line;
    an auxiliary power source (8) configured to charge the DC bus line with the DC power and discharge the DC power from the DC bus line; and
    a first inverter (7) configured to control power supply to a motor using the DC power from the DC bus line,
    the auxiliary power source (8) comprising:

    a rotating electrical machine (22);
    a flywheel (23) connected to the rotating electrical machine (22);
    a second inverter (21) configured to supply power to the rotating electrical machine (22) using the DC power on the DC bus line and configured to regenerate the power from the rotating electrical machine (22) into the DC power on the DC bus line; and
    a controller (24) configured to control the second inverter (21) to cause a rotational angle velocity of the flywheel (23) to keep a positive correlation with a bus-to-bus voltage of the DC bus line.

2.  The motor controller (1) according to claim 1, wherein the controller (24) is configured to control the second inverter (21) to cause the rotational angle velocity to keep a direct-proportional correlation with the bus-to-bus voltage using a proportional coefficient represented by a square root of a ratio between a denominator represented by an inertia of a rotatable portion of the auxiliary power source (8) comprising a rotor of the rotating electrical machine (22) and the flywheel (23) and a numerator represented by a capacitance of a capacitor having accumulable energy equivalent to the inertia.

3. The motor controller (1) according to claim 2, wherein the controller (24) is configured to calculate a rotational angle velocity based on the proportional coefficient and based on a bus-to-bus voltage detected from the DC bus line, and configured to input the rotational angle velocity into the second inverter (21) as a velocity command, and

wherein the second inverter (21) is configured to supply the power to the rotating electrical machine (22) to keep a velocity indicated by the input velocity command.

4. The motor controller (1) according to claim 3, wherein the second inverter (21) is configured to supply the power to the rotating electrical machine (22) to keep the velocity indicated by the input velocity command by feedback control using, as a feedback value, a rotational angle velocity detected from at least one of the rotating electrical machine (22) and the flywheel (23).

5. A power converter, **characterized by**:

an AC-to-DC converter (5) configured to convert AC power from an AC power source into DC power and configured to supply the DC power to a DC bus line; and

an auxiliary power source (8) configured to charge the DC bus line with the DC power and discharge the DC power from the DC bus line, the auxiliary power source (8) comprising:

a rotating electrical machine (22);
a flywheel (23) connected to the rotating electrical machine (22);
a second inverter (21) configured to supply power to the rotating electrical machine (22) using the DC power on the DC bus line and configured to regenerate the power from the rotating electrical machine (22) into the DC power on the DC bus line; and
a controller (24) configured to control the second inverter (21) to cause a rotational angle velocity of the flywheel (23) to keep a positive correlation with a bus-to-bus voltage of the DC bus line.

6. An auxiliary power source (8) configured to charge a DC bus line with DC power and discharge the DC power from the DC bus line, **characterized by**:

a rotating electrical machine (22);
a flywheel (23) connected to the rotating electrical machine (22);
a second inverter (21) configured to supply power to the rotating electrical machine (22) using the DC power on the DC bus line and configured to regenerate the power from the rotating electrical machine (22) into the DC power on the DC bus line; and
a controller (24) configured to control the second inverter (21) to cause a rotational angle velocity of the flywheel (23) to keep a positive correlation with a bus-to-bus voltage of the DC bus line.

7. A method for controlling an auxiliary power source (8), the auxiliary power source (8) comprising:

a rotating electrical machine (22);
a flywheel (23) connected to the rotating electrical machine (22); and
a second inverter (21) configured to supply power to the rotating electrical machine (22) using DC power on a DC bus line and configured to regenerate the power from the rotating electrical machine (22) into the DC power on the DC bus line, **characterized by**:
controlling the second inverter (21) to cause a rotational angle velocity of the flywheel (23) to keep a positive correlation with a bus-to-bus voltage of the DC bus line.

**FIG. 1**

FIG. 2

# FIG. 3

# FIG. 4

FIG. 5

Auxiliary power source: none

EP 3 484 043 A1

**FIG. 6**  Auxiliary power source: charging-discharging capacitor

EP 3 484 043 A1

# FIG. 7

**Auxiliary power source: flywheel battery (auxiliary power source)**

Bus-to-bus voltage $V_1$ (V)

Load motor power (kW)

Converter output (kW)

・Velocity command
・Velocity detection value (rpm)

- - - - : Velocity command  ——— : Velocity detection value

EP 3 484 043 A1

# FIG. 8

Velocity command generator (51): $\sqrt{\dfrac{C}{J}}$

DC bus-to-bus voltage $V_1$ → Velocity command generator (51) → Velocity command (rotational angle velocity) $\omega$ → (52) → Velocity error $\Delta\omega$ → Velocity controller (53) → Torque command → PWM controller (54) → Driving power → M (22) → W (23)

Velocity detection value $\omega_{FB}$ → Velocity detector (57)

Current detection value $I_m$

Voltage detection value $V_m$

EP 3 484 043 A1

Europäisches
Patentamt

European
Patent Office

Office européen
des brevets

## EUROPEAN SEARCH REPORT

Application Number

EP 18 16 5416

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/005606 A1 (KUROKI WATARU [JP]) 5 January 2017 (2017-01-05) * paragraph [0089] - paragraph [0095]; figure 6 * ----- | 1-7 | INV. H02P6/08 H02M5/458 ADD. H02K7/02 |
| Y | GB 623 002 A (BRITISH THOMSON HOUSTON CO LTD; THOMAS HAYES PETCH) 11 May 1949 (1949-05-11) * equation 1; page 4, line 18 - line 81; figures 1,2 * ----- | 1-7 | |
| Y | GB 463 040 A (BRITISH THOMSON HOUSTON CO LTD; THOMAS HAYES PETCH JR; HUGH WILLIAM CO) 15 March 1937 (1937-03-15) * page 3, line 98 - line 107 * * page 4, line 97 - line 107 * ----- | 1-7 | |

TECHNICAL FIELDS
SEARCHED      (IPC)

H02P
H02M
H02K

The present search report has been drawn up for all claims

| Place of search | Date of completion of the search | Examiner |
|---|---|---|
| Munich | 13 September 2018 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 484 043 A1**

**ANNEX TO THE EUROPEAN SEARCH REPORT
ON EUROPEAN PATENT APPLICATION NO.**

EP 18 16 5416

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2018

| Patent document cited in search report | | Publication date | Patent family member(s) | | Publication date |
|---|---|---|---|---|---|
| US 2017005606 | A1 | 05-01-2017 | CN 106330056 A | | 11-01-2017 |
| | | | DE 102016007785 A1 | | 05-01-2017 |
| | | | JP 6219888 B2 | | 25-10-2017 |
| | | | JP 2017017931 A | | 19-01-2017 |
| | | | US 2017005606 A1 | | 05-01-2017 |
| GB 623002 | A | 11-05-1949 | NONE | | |
| GB 463040 | A | 15-03-1937 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5291763 B